# EUROPEAN PATENT APPLICATION

(11) **EP 4 368 676 A1**
(43) Date of publication of application: **15.05.2024**
(21) Application number: 22837523.4
(22) Date of filing: 27.06.2022
(51) Int. Cl.: C09D 5/16, C08K 5/01, C08K 5/56, C08L 83/16, C08L 91/00, C09D 183/08, C09D 7/20, C09D 7/63

(54) **CURABLE COMPOSITION, CURED FILM, AND ARTICLE**

(30) Priority: 09.07.2021 JP 2021113997
(71) Applicant: ThreeBond Co., Ltd., Tokyo 192-0398 (JP)
(72) Inventor: KUBOYAMA, Toshifumi, Hachioji-shi, Tokyo 192-0398 (JP); KIRINO, Manabu, Hachioji-shi, Tokyo 192-0398 (JP)
(74) Representative: Crow, Martin
(86) International application number: PCT/JP2022/025506
(87) International publication number: WO 2023/282106

(57) **Abstract**

A curable composition containing components (A) to (E) as follows, and containing 12 to 85% by mass of the component (A), 12 to 85% by mass of the component (B), and 0.5 to 20% by mass of the component (C), relative to 100% by mass in total of the component (A), the component (B) and the component (C): (A) an organic solvent having an initial boiling point of 85°C or higher and lower than 145°C; (B) an organic solvent having an initial boiling point of 145°C or higher and lower than 190°C; (C) an organic solvent having an initial boiling point of 190°C or higher and lower than 250°C; (D) a polysilazane compound; and (E) a catalyst. According to the present invention, there is provided a curable composition excellent in drying properties, recovery workability after an elapse of a certain period of time, and water repellency of a coating film.

## Description

### TECHNICAL FIELD

The present invention relates to a curable composition excellent in drying properties, recovery workability after an elapse of a certain period of time, and water repellency of a coating film.

### BACKGROUND ART

Conventionally, curable compositions have been applied to and installed on painted steel plates and the like of automobile bodies for their protection and aesthetic improvement. For example, JP 2014-139301 A discloses a curable composition mainly composed of a polysilazane compound and having excellent water repellency.

### SUMMARY OF INVENTION

However, the curable composition described in JP 2014-139301 A has poor workability as it dries too quickly after start of construction and becomes difficult to wipe off immediately. Moreover, in the application work with such a curable composition, an unevenness (an area where a thickness is not uniform) may be found after a certain period of time has elapsed from the start of the construction. Thus, in such a case, recovery work is often performed to adjust a thickness of the curable composition by wiping it up with a microfiber or the like in order to remove the unevenness. Therefore, the curable composition also requires easiness of recovery work (hereinafter referred to as "recovery workability"). With regard to such characteristics, the curable composition described in JP 2014-139301 A has favorable recovery workability immediately after start of construction; however, the recovery workability reduces after an elapse of a certain period of time, making it difficult to wipe up the curable composition. Furthermore, in a case in which a coating film is formed on a surface of a painted steel plate or the like of an automobile body, imparting of or improvement of water repellency is required, and accordingly a coating film after curing (cured film) is also required to have favorable water repellency.

The present invention has been made in view of the aforementioned situation, and an object of the present invention is to provide a curable composition excellent in drying properties, recovery workability after an elapse of a certain period of time, and water repellency of a coating film. Another object of the present invention is to provide a cured film using the aforementioned curable composition. Furthermore, another object of the present invention is to provide an article having the cured film.

As a result of intensive studies to achieve the aforementioned objects, the present inventors have found a method for obtaining a curable composition excellent in drying properties, recovery workability after an elapse of a certain period of time, and water repellency of a coating film, and thus have completed the present invention.

The gist of the present invention will be described below.
1. A curable composition containing components (A) to (E)as follows, and containing 12 to 85% by mass of the component (A), 12 to 85% by mass of the component (B), and 0.5 to 20% by mass of the component (C), relative to 100% by mass in total of the component (A), the component (B) and the component (C):
   (A) an organic solvent having an initial boiling point of 85°C or higher and lower than 145°C;
   (B) an organic solvent having an initial boiling point of 145°C or higher and lower than 190°C;
   (C) an organic solvent having an initial boiling point of 190°C or higher and lower than 250°C;
   (D) a polysilazane compound; and
   (E) a catalyst.
2. The curable composition according to 1. above,
   wherein the component (D) is an organic polysilazane compound or a polysiloxazane compound.
3. The curable composition according to 1. or 2. above, wherein the component (E) contains at least one selected from the group consisting of an organotitanium compound, an organoaluminum compound, an inorganic acid compound, and an organic base compound.
4. The curable composition according to any one of 1. to 3. above, wherein a total amount of the components (A) to (C) is 10 to 800 parts by mass relative to 10 parts by mass of the component (D).
5. The curable composition according to any one of 1. to 4. above, wherein the component (C) contains at least one selected from the group consisting of isoparaffins having 14 to 18 carbon atoms and normal paraffins having 13 to 17 carbon atoms.
6. The curable composition according to any one of 1. to 5. above, wherein the composition is used for forming a coating film on a surface of a substrate selected from the group consisting of metal, glass, ceramics, a plastic, a fiber, a steel plate, and an exterior steel plate.
7. The curable composition according to any one of 1. to 5. above, being used as an antifouling coating agent.
8. A cured film obtained by curing the curable composition according to any one of 1. to 5. above.
9. An article having the cured film according to 8. above formed thereon, wherein the article is selected from the group consisting of an automobile, a two-wheeled vehicle, a bicycle, a railroad vehicle, a solar panel, a vending machine, and a building.

### DESCRIPTION OF EMBODIMENTS

Details of the present invention will be described below. The phrase "X to Y" herein is used in the meaning of including the numerical values described before and after the term "to" (X and Y) as the lower limit value and the upper limit value, respectively, and means "X or more and Y or less". The terms "concentration" and "%" also refer to a concentration by mass and % by mass, respectively, unless otherwise specified, and the term "ratio" refers to a mass ratio unless otherwise specified. Operation and measurements of physical properties and the like shall also be conducted under the conditions of room temperature (20 to 25°C)/relative humidity 40 to 55% RH, unless otherwise specified. Furthermore, the phrase "A and/or B" also means that each of A and B and a combination thereof are included.

### [Curable composition]

The curable composition according to one aspect of the present invention (hereinafter simply referred to as the "curable composition") contains components (A) to (E) as follows, wherein the composition contains 12 to 85% by mass of the component (A), 12 to 85% by mass of the component (B), and 0.5 to 20% by mass of the component (C), relative to 100% by mass in total of the component (A), the component (B) and the component (C) (provided that the total content of the component (A), the component (B) and the component (C) is 100% by mass):
(A) an organic solvent having an initial boiling point of 85°C or higher and lower than 145°C;
(B) an organic solvent having an initial boiling point of 145°C or higher and lower than 190°C;
(C) an organic solvent having an initial boiling point of 190°C or higher and lower than 250°C;
(D) a polysilazane compound; and
(E) a catalyst.

That is, the curable composition contains the components (A) to (E), which will be described in detail below, and contains the components (A) to (C) in specific ratios among the (A) to (E) components. Having such a composition allows the curable composition of the present invention to be excellent in drying properties, recovery workability after an elapse of a certain period of time, and water repellency of a coating film. The phrase "after an elapse of a certain period of time" used herein is not particularly limited, and refers to, for example, after 30 minutes elapsed. The phrase "recovery workability after an elapse of a certain period of time" is also simply described as "recovery workability."

The initial boiling point used herein is defined as the value measured by the atmospheric distillation method described in JIS K 0066: 1992 (Test methods for distillation of chemical products).

Each component contained in a curable composition will be described below.

### <Component (A)>

A component (A) contained in the curable composition of the present invention is an organic solvent having an initial boiling point of 85°C or higher and lower than 145°C. The term "organic solvent" herein refers to a liquid organic compound capable of dissolving or uniformly dispersing a component (D) and a component (E) contained in the curable composition. It is to be noted that the term "liquid" refers to a state having fluidity at 25°C. More specifically, the term "liquid" refers to a state having a viscosity of 1,000 Pa·s or lower as measured by a B-type viscometer at 25°C under atmospheric pressure. From the viewpoint of improving workability, the viscosity of the organic solvent is preferably 100 Pa·s or lower, more preferably 1,000 mPa·s or lower (1 Pa·s or lower), and particularly preferably 150 mPa·s or lower. On the other hand, the lower limit value is not particularly limited, and is, for example, 0.1 mPa·s or higher.

A content of the component (A) in the curable composition is 12 to 85% by mass when the total mass of the components (A) to (C) is 100% by mass. By setting the content of the component (A) within the above predetermined range and combining the component (A) with the other components of the present invention (in particular, component (B) and component (C)) a coating film with excellent water repellency can be obtained. When the curable composition does not contain the component (A), water repellency of the coating film reduces (Comparative Example 4 described below). Moreover, when the curable composition does not contain the component (A) and contains an organic solvent having a initial boiling point lower than an initial boiling point of the component (A) (i.e., lower than 85°C), the recovery workability reduces (Comparative Example 8 below).

The initial boiling point of the component (A) is more preferably 90 to 140°C, particularly preferably 95 to 135°C, and most preferably 110 to 135°C.

Examples of organic solvents that can be used as component (A) include an aliphatic hydrocarbon-based solvent, an aromatic hydrocarbon-based solvent, and the like, among which the aliphatic hydrocarbon-based solvent is preferred. Furthermore, from the viewpoints of volatility and recovery workability, the component (A) is preferably a petroleum-based hydrocarbon solvent containing at least one selected from aliphatic hydrocarbons having an initial boiling point within the above range and having 6 to 10 carbon atoms.

The aliphatic hydrocarbon-based solvent that can be used as component (A) is not particularly limited, and examples thereof include, for example, chain aliphatic hydrocarbons such as isoparaffins having 7 to 10 carbon atoms and normal paraffins having 6 to 9 carbon atoms; a cyclic aliphatic hydrocarbons such as alkyl cyclohexanes having 7 to 8 carbon atoms; or petroleum-based hydrocarbon solvents containing these hydrocarbons, however, as the component (A), the chain aliphatic hydrocarbon or the petroleum-based hydrocarbon solvent containing the hydrocarbon, is preferably used. Among them, the component (A) is preferably a petroleum-based hydrocarbon solvent containing at least one selected from the group consisting of isoparaffins having 7 to 10 carbon atoms and normal paraffins having 6 to 9 carbon atoms. The component (A) is more preferably a petroleum-based hydrocarbon solvent containing at least one selected from the group consisting of isoparaffins having 7 to 10 carbon atoms and particularly preferably a petroleum-based hydrocarbon solvent containing at least one selected from the group consisting of isoparaffins having 8 to 9 carbon atoms.

More specifically, examples of component (A) include isooctane, isononane, or petroleum-based hydrocarbon solvents containing these. The component (A) is preferably petroleum-based hydrocarbon solvents containing isooctane and/or isononane, and particularly preferably a petroleum-based hydrocarbon solvent containing isononane. The organic solvents as component (A) may be used singly or in combinations of a plurality thereof. When two or more types are used together, a content of the component (A) refers to the total amount.

Examples of commercially available products of component (A) include Marcasol 8 (initial boiling point 97°C) (manufactured by Maruzen Petrochemical Co., Ltd.), Kyowasol (registered trademark) C-900 (initial boiling point 131°C) (manufactured by KH Neochem Co., Ltd.), ISOPAR (registered trademark) C (initial boiling point 98°C) (manufactured by Standard Sekiyu Osaka Hatsubaisho Co., Ltd.), and the like.

An amount of component (A) added (a content in the curable composition) is 12 to 85% by mass, preferably 16 to 80% by mass, and particularly preferably 20 to 70% by mass, relative to 100% by mass in total of a component (A), a component (B) and a component (C). Within the above range of the amount of component (A), a curable composition excellent in drying properties, recovery workability after an elapse of a certain period of time, and water repellency of a coating film, can be obtained. Moreover, a content of the component (A) is also preferably 80 to 350 parts by mass, further preferably 100 to 300 parts by mass, particularly preferably 120 to 250 parts by mass, and most preferably 130 to 230 parts by mass, relative to 10 parts by mass of the component (D) described below. The content of the component (A) within the above range can bring about not only a desired effect but also moderate drying properties that allow the curable composition to be installed even in a high temperature (40°C) environment in summer.

### <Component (B)>

A component (B) contained in the curable composition of the present invention is an organic solvent having an initial boiling point of 145°C or higher and lower than 190°C. A content of the component (B) in the curable composition is 12 to 85% by mass when the total mass of the components (A) to (C) is 100% by mass. By setting the content of the component (B) within the above predetermined range and combining the component (B) with the other components of the present invention (in particular, component (A) and component (C)), a curable composition excellent in recovery workability after an elapse of a certain period of time can be obtained. When the curable composition does not contain the component (B), the recovery workability reduces (Comparative Examples 1 and 3 described below).

The initial boiling point of the component (B) is more preferably 155 to 185°C and particularly preferably 165 to 180°C.

Examples of organic solvents that can be used as component (B) include an aliphatic hydrocarbon-based solvent, an aromatic hydrocarbon-based solvent, and the like, among which the aliphatic hydrocarbon-based solvent is preferred. Furthermore, from the viewpoints of volatility and recovery workability, the component (B) is preferably a petroleum-based hydrocarbon solvent containing at least one selected from aliphatic hydrocarbons having an initial boiling point within the above range and having 9 to 14 carbon atoms.

The aliphatic hydrocarbon-based solvent that can be used as the component (B) is not particularly limited, and examples thereof include, for example, chain aliphatic hydrocarbons such as isoparaffins having 10 to 14 carbon atoms and normal paraffins having 9 to 13 carbon atoms; cyclic aliphatic hydrocarbons such as alkyl cyclohexanes having 7 to 12 carbon atoms; or petroleum-based hydrocarbon solvents containing these hydrocarbons; however, as the component (B), the chain aliphatic hydrocarbon or the petroleum-based hydrocarbon solvent containing the hydrocarbon is preferred used. Among them, the component (B) is preferably a petroleum-based hydrocarbon solvent containing at least one selected from the group consisting of isoparaffins having 10 to 14 carbon atoms and normal paraffins having 9 to 13 carbon atoms. The component (B) is more preferably a petroleum-based hydrocarbon solvent containing at least one selected from the group consisting of isoparaffins having 10 to 14 carbon atoms and particularly preferably a petroleum-based hydrocarbon solvent containing at least one selected from the group consisting of isoparaffins having 11 to 13 carbon atoms.

More specifically, examples of component (B) include isoundecane, isododecane, isotridecane, or petroleum-based hydrocarbon solvents containing these. The component (B) is preferably a petroleum-based hydrocarbon solvent containing at least one selected from the group consisting of isoundecane, isododecane, and isotridecane, more preferably a petroleum-based hydrocarbon solvent containing isoundecane and/or isododecane, and particularly preferably a petroleum-based hydrocarbon solvent containing isododecane. The organic solvents as component (B) may be used singly or in combinations of a plurality thereof. When two or more types are used together, a content of the component (B) refers to the total amount.

Examples of commercially available products of component (B) include a 181 solvent (initial boiling point 178°C) (manufactured by DAISHIN CHEMICAL CO., LTD.), Markasol R (initial boiling point 178°C) (manufactured by Maruzen Petrochemical Co., Ltd.), ISOPER (registered trademark) G (initial boiling point 167°C), ISOPER (registered trademark) H (initial boiling point 179°C), NORPER 10 (initial boiling point 169°C), (manufactured by Standard Sekiyu Osaka Hatsubaisho CO., LTD.), IP solvent 1620 (initial boiling point 166°C) (manufactured by Idemitsu Kosan Co., Ltd.), and the like.

An amount of component (B) added (a content in the curable composition) is 12 to 85% by mass, preferably 16 to 80% by mass, and particularly preferably 20 to 70% by mass, relative to 100% by mass in total of a component (A), a component (B) and a component (C). Within the above range of the amount of component (B), a curable composition excellent in drying properties, recovery workability after an elapse of a certain period of time, and water repellency of a coating film, can be obtained. Moreover, a content of the component (B) is also preferably 50 to 400 parts by mass, further preferably 60 to 320 parts by mass, and particularly preferably 70 to 300 parts by mass, relative to 10 parts by mass of the component (D) described below. Within the above range of the content of the component (B), not only the desired effect but also moderate drying properties that allow the curable composition to be installed even in a high temperature (40°C) environment in summer, can be provided.

### <Component (C)>

The component (C) contained in the curable composition of the present invention is an organic solvent having an initial boiling point of 190°C or higher and lower than 250°C. A content of the component (C) in the curable composition is 0.5 to 20% by mass when the total mass of the components (A) to (C) is 100% by mass. By setting the content of the component (C) within the above predetermined range and combining the component (C) with other components of the present invention (in particular, component (A) and component (B)), a curable composition excellent in drying properties and recovery workability after an elapse of a certain period of time, can be obtained. When the content of the component (C) exceeds the above predetermined range or an organic solvent having an initial boiling point of 250°C or higher is contained instead of the component (C), the drying properties of the curable composition reduce (Comparative Examples 5 and 7 described below). When the curable composition does not contain the component (C) (an organic solvent having an initial boiling point of 190°C or higher is not contained), the recovery workability reduces (Comparative Examples 2 and 6 described below).

The initial boiling point of the component (C) is more preferably 200 to 240°C and particularly preferably 210 to 230°C.

Examples of organic solvents that can be used as component (C) include an aliphatic hydrocarbon-based solvent, an aromatic hydrocarbon-based solvent, and the like, among which the aliphatic hydrocarbon-based solvent is preferred. Furthermore, from the viewpoints of volatility and recovery workability, the component (C) is preferably a petroleum-based hydrocarbon solvent containing at least one selected from the group consisting of aliphatic hydrocarbons having an initial boiling point within the above range and having 13 to 18 carbon atoms.

The aliphatic hydrocarbon-based solvent that can be used as the component (C) is not particularly limited, and examples thereof include, for example, chain aliphatic hydrocarbons such as isoparaffins having 14 to 18 carbon atoms and normal paraffins having 13 to 17 carbon atoms, or petroleum-based hydrocarbon solvents containing these hydrocarbons. The component (C) is preferably a petroleum-based hydrocarbon solvent containing at least one selected from the group consisting of isoparaffins having 14 to 18 carbon atoms and normal paraffins having 13 to 17 carbon atoms, more preferably a petroleum-based hydrocarbon solvent containing at least one selected from the group consisting of isoparaffins having 14 to 18 carbon atoms, and particularly preferably a petroleum-based hydrocarbon solvent containing at least one selected from the group consisting of isoparaffins having 15 to 17 carbon atoms.

More specifically, examples of the component (C) include isopentadecane, isohexadecane, isoheptadecane, or petroleum-based hydrocarbon solvents containing these. The component (C) is preferably a petroleum-based hydrocarbon solvent containing at least one selected from the group consisting of isopentadecane, isohexadecane, and isoheptadecane, and particularly preferably a petroleum-based hydrocarbon solvent containing isohexadecane. The organic solvents as the component (C) may be used singly or in combinations of a plurality thereof. When two or more types are used together, a content of the component (C) refers to the total amount.

Examples of commercially available products of the component (C) include IP solvent 2028 (initial boiling point 213°C) (Idemitsu Kosan Co., Ltd.), MC531 (initial boiling point 220°C) (Tobu Chemical Co., Ltd.), NORPER 12 (initial boiling point 209°C), NORPER 13 (initial boiling point 222°C) (manufactured by Standard Sekiyu Osaka Hatsubaisho Co., Ltd.), and the like, and among them, IP solvent 2028 and MC531 are preferred.

An amount of component (C) added (a content in the curable composition) is 0.5 to 20% by mass, preferably 1 to 15% by mass, particularly preferably 2 to 10% by mass, and most preferably 4 to 8% by mass, relative to 100% by mass in total of a component (A), a component (B) and a component (C). Within the above range of the amount of component (C), a curable composition excellent in drying properties, recovery workability after an elapse of a certain period of time, and water repellency of a coating film, can be obtained. Moreover, a content of the component (C) is also preferably 5 to 50 parts by mass, more preferably 7 to 40 parts by mass, and particularly preferably 10 to 30 parts by mass, relative to 10 parts by mass of the component (D) described below. The content of the component (C) within the above range can bring about not only a desired effect but also moderate drying properties that allow the curable composition to be installed even in a high temperature (40°C) environment in summer.

A total amount of the component (A) and the component (B) relative to 1 part by mass of the component (C) is also not particularly limited, and is, for example, 5 to 80 parts by mass, preferably 7 to 60 parts by mass, more preferably 10 to 45 parts by mass, particularly preferably 12 to 30 parts by mass, and most preferably 13 to 25 parts by mass. Within the above range of the total amount of the component (A) and the component (B), a curable composition excellent particularly in recovery workability after an elapse of a certain period of time, can be obtained.

A total amount of the components (A) to (C) is also not particularly limited, and is preferably 10 to 800 parts by mass, more preferably 75 to 700 parts by mass, more preferably 135 to 600 parts by mass, and particularly preferably 200 to 500 parts by mass, relative to 10 parts by mass of component (D) described below. Within the above range of the total amount of the components (A) to (C), the drying properties, recovery workability after an elapse of a certain period of time (after 10 minutes or longer elapsed), and water repellency of a coating film can be further improved.

The curable composition according to the present invention preferably contains only the components (A) to (C) as organic solvents. In other words, the curable composition according to the present invention preferably contains substantially no organic solvent other than the components (A) to (C). Herein, the phrase "contains substantially no organic solvent other than the components (A) to (C)" means that a content of organic solvent other than the components (A) to (C) relative to the entirety of organic solvents contained in the curable composition is less than 0.01% by mass. Namely, in one embodiment of the present invention, a content of organic solvent other than the components (A) to (C) is less than 0.01% by mass (lower limit: 0% by mass), when the total mass of organic solvents contained in the curable composition is 100% by mass.

<Component (D)>

A component (D) contained in the curable composition of the present invention is a polysilazane compound. Combining the component (D) with other components of the present invention provides a curable composition excellent in drying properties, recovery workability after an elapse of a certain period of time, and water repellency of a coating film. The component (D) is not particularly limited as long as it is a compound having a plurality of Si-N bonds. Such a polysilazane compound is generally known to be hydrolyzed by moisture present in the air, release nitrogen in the molecule to form ammonia, which then acts as a catalyst and further accelerates reaction, thereby forming a Si-O bond in three dimensions.

The component (D) is not particularly limited, and examples thereof include, for example, an organic polysilazane compound, an inorganic polysilazane compound, a polysiloxazane compound, and the like. Among them, because a curable composition further excellent in drying properties, recovery workability after a certain time elapsed, and water repellency of a coating film, can be obtained, the component (D) is preferably an organic polysilazane compound or a polysiloxazane compound and more preferably an organic polysilazane compound.

The term "organic polysilazane compound" and "inorganic polysilazane compound" herein each refer to a compound having a repeated structure represented by "-(SiR¹R²-NR³)-" in the main chain of the molecule and having no repeated structure represented by "-(SiR⁴R⁵-O)-". The term "polysiloxazane compound" herein refers to a compound having both the repeated structure represented by "-(SiR¹R²-NR³)-" and repeated structure represented by "-(SiR⁴R⁵-O)-" in the main chain of the molecule.

In the above formula, R¹, R² and R³ each independently represent a hydrogen atom or an organic group selected from optionally substituted hydrocarbon groups. In the above formula, R⁴ and R⁵ each independently represent a linear or branched alkyl group having 1 to 20 carbon atoms, a cycloalkyl group having 3 to 20 carbon atoms, or an aryl group having 6 to 20 carbon atoms.

It is to be noted that when simply described as a "polysilazane compound," the term refers to a compound having a plurality of Si-N bonds in the main chain, with or without a Si-O bond, and includes a "polysiloxazane compound." However, in order to distinguish the "polysilazane compound" from the "polysiloxazane compound,"in the present description, a compound that does not have a Si-O bond in the main chain but has a Si-N bond is referred to as an "organic polysilazane compound" or an "inorganic polysilazane compound."

The above R¹, R², and R³ are each independently preferably a hydrogen atom or an organic group selected from optionally substituted hydrocarbon groups having 1 to 6 carbons, and more preferably a hydrogen atom or an organic group selected from aliphatic hydrocarbons group having 1 to 4 carbon atoms.

Examples of the hydrocarbon group having 1 to 6 carbon atoms include saturated aliphatic hydrocarbon groups such as a methyl group, an ethyl group, a n-propyl group, an isopropyl group, a n-butyl group, an isobutyl group, a sec-butyl group, a tert-butyl group, and a n-pentyl group, an isopentyl group, a neopentyl group, a n-hexyl group, an isohexyl group, a 3-methylpentyl group, and an ethylbutyl group; unsaturated aliphatic hydrocarbon groups such as a vinyl group, an allyl group, an isopropenyl group, a 2-butenyl group, a 2-methylallyl group, a 4-pentenyl group, and a hexenyl group; alicyclic hydrocarbon groups such as a cyclopropyl group, a cyclobutyl group, a cyclopentyl group, and a cyclohexyl group; and an aromatic hydrocarbon group such as a phenyl group.

Examples of the aliphatic hydrocarbon group having 1 to 4 carbon atoms include those having 1 to 4 carbon atoms among the saturated aliphatic hydrocarbon groups, unsaturated aliphatic hydrocarbon groups, and alicyclic hydrocarbon groups mentioned above.

The substituents which can substitute the hydrocarbon groups are not particularly limited, and examples thereof include, for example, halogen atoms such as fluorine, chlorine, bromine, and iodine; alkyl groups such as a methyl group and an ethyl group; aryl groups such as a phenyl group, a p-tolyl group, a xylyl group, and a naphthyl group; alkoxy groups such as a methoxy group, an ethoxy group, and a tert-butoxy group; aryloxy groups such as a phenoxy group, and a p-tolyloxy group; alkoxycarbonyl groups such as a methoxycarbonyl group, a butoxycarbonyl group, a (2-ethylhexyl)oxycarbonyl and a phenoxycarbonyl group; acyloxy groups such as an acetoxy group, a propionyloxy group, and a benzoyloxy group; acyl groups such as an acetyl group, a benzoyl group, an isobutyryl group, an acryloyl group and a methacryloyl group; alkylamino groups such as a methylamino group and a cyclohexylamino group; dialkylamino groups such as a dimethylamino group, a diethylamino group, a morpholino group, and a piperidino group; arylamino groups such as a phenylamino group and a p-tolylamino group; and the like as well as a hydroxy group, a carboxy group, a formyl group, a mercapto group, a sulfo group, an amino group, a nitro group, a cyano group, a trifluoromethyl group, a trichloromethyl group, a trimethylsilyl group, a phosphono group, and the like. However, the above hydrocarbon groups are not the same as substituents with which the above hydrocarbon groups are substituted. For example, when the hydrocarbon group is an alkyl group, it is not substituted with an alkyl group.

Herein, for the compound having a repeated structure represented by "- (SiR¹R²-NR³) -" in the main chain of the molecule and having no repeated structure represented by "-(SiR⁴R⁵-O)-," those with the above R¹, R², and R³, being all hydrogen atoms, refer to "inorganic polysilazane compounds" and those with at least one of the above R¹, R², and R³, being any of the organic groups, refer to "organic polysilazane compounds."

These polysilazane compounds (preferably an organic polysilazane compound, an inorganic polysilazane compound, and a polysiloxazane compound) as the component (D) may be used singly or in combinations of a plurality thereof. When two or more types are used together, a content of the component (D) refers to the total amount.

As commercially available products of the component (D) of the present invention, the organic polysilazane compounds that are, for example, KiON HTA1500 rapid cure, KiON HTA1500 slow cure, KiON HTT1800 slow cure, tutoProm (registered trademark) matt HD, tutoProm (registered trademark) bright G, CAG 37 (manufactured by AZ Electronic Material SA), and the like, can be used. Examples of the inorganic polysilazane compounds also include AQUAMICA (registered trademark) NP110-20, AQUAMICA (registered trademark) NP140-2 (manufactured by AZ Electronic Material SA), and the like. The polysiloxazane compounds can also be obtained by the production methods disclosed in JP 62-195024 A, JP 2004-532318 A, JP 2020-122033 A, JP 2021-055052 A, and the like.

An amount of component (D) added in the curable composition according to the present invention (a content in the curable composition) is not particularly limited, and is preferably, for example, 0.5 to 10 parts by mass, more preferably 1.0 to 8 parts by mass, and particularly preferably 1.5 to 5 parts by mass, relative to 100 parts by mass in total of the components (A) to (C). Within the above range of the content of component (D), a curable composition further excellent in drying properties, recovery workability after an elapse of a certain period of time, and water repellency of a coating film, can be obtained.

### <Component (E)>

A component (E) contained in the curable composition of the present invention is a catalyst. Containing the component (E) in the curable composition allows a Si-N bond which is a hydrolyzable functional group contained in the above component (D), to react with moisture in the air and the like to accelerate a condensation reaction, forming a cured film.

Examples of the component (E) include, for example, an organotin compound, an organotitanium compound, an organoaluminum compound, an organozinc compound, an organozirconium compound, an inorganic acid compound, an organic acid compound, an inorganic base compound, an organic base compound, and the like. Among them, the component (E) preferably contains at least one selected from the group consisting of an organotitanium compound, an organoaluminum compound, an inorganic acid compound, and an organic base compound, more preferably contains at least one selected from the group consisting of an organotitanium compound and an organoaluminum compound, and particularly preferably contains an organotitanium compound, because the above component (E) has favorable compatibility with the component (D), and a curable composition excellent in drying properties, recovery workability after a certain time elapsed, and water repellency of a coating film can be obtained. These may be used singly or in combinations of a plurality thereof.

Examples of the organotin compound include dibutyltin dilaurate, dibutyltin dioctate, dibutyltin diacetate, dioctyltin dilaurate, dioctyltin dioctate, dioctyltin diacetate, dibutyltin bisacetylacetate, dioctyltin bisacetyllaurate, and the like. Examples of the organotitanium compound include titanium chelate compounds such as titanium acetylacetonate, titanium-1,3-propanedioxybis(ethylacetoacetate), and titanium ethyl acetoacetate; titanium alkoxide compounds such as tertiary amyl titanate, tetra-tert-butyl titanate, tetrastearyl titanate, tetraoctyl titanate, tetra-n-butyl titanate, and tetraisopropyl titanate. Examples of the organoaluminum compound include aluminum chelate compounds such as aluminum methoxybis(ethylacetoacetate), aluminum methoxybis(acetylacetonate), aluminum ethoxybis(ethylacetoacetate), aluminum ethoxybis(acetylacetonate), aluminum isopropoxybis(ethylacetoacetate), aluminum isopropoxybis(methylacetoacetate), aluminum isopropoxybis(tert-butylacetoacetate), aluminum butoxybis(ethylacetoacetate), aluminum dimethoxy(ethylacetoacetate), aluminum dimethoxy(acetylacetonate), aluminum diethoxy(ethylacetoacetate), aluminum diethoxy(acetylacetonate), aluminum diisopropoxy(ethylacetoacetate), aluminum diisopropoxy(methylacetoacetate), aluminum tris(ethyl acetoacetate), aluminum tris(acetylacetonate); aluminum alkoxide compounds such as aluminum trimethoxide, aluminum triethoxide, aluminum triallyloxide, and aluminum triphenoxide; aluminum trihydroxide; an aluminosiloxy compound, and the like. Examples of the organozinc compound include zinc octylate, zinc 2-ethylhexanoate, zinc triacetylacetonate, zinc-2-ethylhexoate, zinc naphthenate, zinc stearate, and the like. Examples of the organozirconium compounds include zirconium tetraacetylacetonate, zirconium tributoxyacetylacetonate, zirconium dibutoxydiacetylacetonate, zirconium tetranormalpropoxide, zirconium tetraisopropoxide, zirconium tetranormalbutoxide, zirconium acylate, zirconium tributoxystearate, zirconium octoate, zirconyl(2-ethylhexanoate), zirconium(2-ethylhexoate), and the like.

Examples of the inorganic acid compound include hydrochloric acid, phosphoric acid, sulfuric acid, hydrofluoric acid, and the like. Examples of the organic acid compound include p-toluenesulfonic acid, oxalic acid, citric acid, acetic acid, and the like. Examples of the inorganic base compound include ammonia and sodium hydroxide, magnesium hydroxide, and the like. Examples of the organic base compound include trimethylamine, triethylamine, tributylamine, 1,5-diazabicyclo[4.3.0]nonen-5 (DBN), 1,8-diazabicyclo[5.4.0]undecene -7 (DBU), and the like.

The catalysts may be used singly or in combinations of a plurality thereof. When two or more types are used together, a content of the component (E) refers to the total amount.

Examples of commercially available products of the organotitanium compounds include, for example, ORGATIX (registered trademark) TA-8, TA-21, TA-23, TA-30, TC-100, TC-401, TC-710 (manufactured by Matsumoto Fine Chemical Co., Ltd.), D-20, D-25, DX-175 (manufactured by Shin-Etsu Chemical Co., Ltd.), and the like. Examples of commercially available products of the organoaluminum compounds include, for example, DX-9740 and CAT-AC (manufactured by Shin-Etsu Chemical Co., Ltd.), and the like. Examples of commercially available products of the inorganic acid compounds include, for example, D-220 and X-40-2309A (manufactured by Shin-Etsu Chemical Co., Ltd.), and the like.

An amount of component (E) added (a content in the curable composition) is not particularly limited, and is preferably, for example, 0.01 to 50 parts by mass of component (E), more preferably 0.03 to 30 parts by mass, particularly preferably 0.5 to 10 parts by mass, and most preferably 1 to 8 parts by mass, relative to 100 parts by mass of the component (D). Within the above range of the content of component (E), a curable composition further excellent in drying properties, recovery workability after an elapse of a certain period of time, and water repellency of a coating film can be obtained.

### <Optional component>

The curable composition according to the present invention may appropriately contain an optional additive to the extent that the characteristics of the curable composition are not impaired. For example, components such as a silicone compound, a silane compound, a filler, an anti-aging agent, a corrosion inhibitor, an antifungal agent, a coloring agent, a surfactant, a rheology modifier, an ultraviolet absorber, a fluorescent agent, an abrasive, a flavoring agent, and a filler, can be selected.

### [Method for forming cured film and cured film]

A method for forming a cured film according to the present invention (method for forming a coating film of a curable composition) is not particularly limited, and examples thereof include the following methods.

First, a brush, sponge, a nonwoven cloth, a microfiber cloth, or the like is impregnated with an appropriate amount of the curable composition according to the present invention, and the composition is applied onto entire surface of a substrate by hand (application step). The nonwoven cloth refers to a cloth made of intertwined fibers without woven, while the microfiber cloth refers to a cloth woven with ultrafine chemical fibers.

Next, the component (E) accelerates reaction of the component (D) to form a coating film of a curable composition (cured film) (reaction step). In other words, another aspect of the present invention provides a method for forming a cured film, including applying the above curable composition to a surface of a substrate, and curing the composition on the surface of the substrate.

It is preferable that a brush, sponge, a nonwoven cloth, or fibers (microfiber cloth and the like) be impregnated with an appropriate amount of the curable composition according to the present invention, and after the composition is applied onto the entire surface of a substrate by hand (after application step), the components (A) to (C) be volatized by natural drying or drying with a dryer or the like (drying step). Namely, it is preferred that the method for forming a cured film according to another aspect of the present invention further include drying (volatilizing) the components (A) to (C) contained in the curable composition on the surface of the substrate after applying the curable composition onto the surface of the substrate.

Drying conditions are not particularly limited, and include 5 to 50°C for 5 to 60 minutes, and the like. The curable composition of the present invention has an advantage of being capable of construction work in a wide range of drying temperatures as described above.

Moreover, the method for forming a cured film according to another aspect of the present invention preferably further includes wiping up (wiping off) an excess of the curable composition (finishing step) after the above application step or drying step. The method for forming a cured film according to the present invention has an advantage of adjusting a thickness of the curable composition and facilitating removal of unevenness in such a finishing step. In other words, the method has excellent recovery workability. The finishing step can be carried out by using a dry cloth, a microfiber cloth, and the like.

Furthermore, according to another aspect of the present invention, a cured film obtained by curing the above curable composition is provided. The cured film formed by using the above curable composition has excellent water repellency.

A thickness of the coating film (cured film) of the curable composition of the present invention is not particularly limited, and is, for example, in a range of 0.01 to 500 µm, preferably in the range of 0.1 to 300 µm, and more preferably in the range of 0.5 to 100 µm. By setting the thickness of the cured film of the curable composition in the above range, favorable water repellency can be maintained. Therefore, in the application step of the method for forming a cured film according to the present invention, the thickness of the coating film is preferably adjusted as appropriate so that a thickness of a coating film when dried is within the above range.

Examples of the substrate include, for example, metal, glass, ceramics, plastics, fibers, and the like, among which the metal, glass, plastics, and the like are preferred. Specific examples of the metal include metal members in the form of rod, sphere, plate, or the like. The metal may also be specifically in the form of a steel plate (metallic steel plate that is unpainted) or an exterior steel plate (painted steel plate). The curable composition of the present invention is suitably used for forming a coating film on a surface of a substrate selected from the group consisting of metal, glass, ceramics, plastics, fibers, a steel plate, and an exterior steel plate. The curable composition of the present invention is more preferably used for forming a coating film on a surface of a substrate selected from the group consisting of plastics, a steel plate, and an exterior steel plate.

Examples of the plastics include a (meth)acrylic resin, a polycarbonate, a polybutylene terephthalate, a polyethylene terephthalate, a polyphenylene sulfide, a polyethylene naphthalate, an acrylonitrile-butadiene-styrene resin, a styrene-methacrylic resin, a polystyrene, a polyethylene, a polypropylene, a polyvinyl chloride, a polyester, a polyurethane, and the like. The term "(meth)acrylic" used herein includes both acrylic and methacrylic.

Among these, the curable composition of the present invention is preferred from the viewpoint of capable of forming a cured film having excellent adhesion to a steel plate (metal steel plate that is unpainted.), a painted steel plate, a (meth)acrylic resin, a polycarbonate, a polybutylene terephthalate, a polyethylene terephthalate, a polyphenylene sulfide, a polyethylene, polypropylene, a styrene-methacrylic resin, and the like.

### [Use]

Examples of the main applications of the curable composition according to the present invention include, for example, an application as an antifouling coating agent. Specific examples thereof include antifouling coating agents for automobiles, two-wheeled vehicles, bicycles, construction machinery, agricultural machinery, aircraft, railroad vehicles, ships, roofs and exterior walls of buildings, window glass, buildings such as bridge girders, road traffic signs, traffic lights, billboards, vending machines, solar panels, and the like, which are installed outdoors for a long period of time; antifouling coating agents for exteriors of equipment and parts, and the like. Among them, the curable composition according to the present invention is suitably used as antifouling coating agents for applications of automobiles, two-wheeled vehicles, bicycles, construction machinery, agricultural machinery, aircraft, railroad vehicles, ships, buildings, vending machines, and solar panels, and is particularly preferred as the antifouling coating agent for an automobile application. As an antifouling coating agent for automobiles, the curable composition is used, for example, as antifouling coating agents for vehicles, headlamps, aluminum wheels, seats, interior parts, and the like.

### [Article]

Furthermore, according to another aspect of the present invention, there is also provided an article having a cured film obtained by curing the aforementioned curable composition formed thereon. Examples of such articles include, for example, automobiles, two-wheeled vehicles, bicycles, railroad vehicles, solar panels, vending machines, buildings, and the like. Namely, another aspect of the present invention also provides an article having the aforementioned cured film, wherein the article is selected from the group consisting of automobiles, two-wheeled vehicles, bicycles, railroad vehicles, solar panels, vending machines, and buildings.

### EXAMPLES

The present invention will be described in more detail by referring to the following Examples, but the present invention is not limited to these Examples. It is noted that operation and tests were conducted at 23°C and 50% RH unless otherwise specified. The concentration and % represent a mass concentration and % by mass, respectively, unless otherwise specified, and a ratio represents a mass ratio unless otherwise specified.

### [Preparation of curable composition]

Each component was weighed to obtain the composition (unit: parts by mass) shown in Table 1, and mixed with a mixer at ordinary temperature for 60 minutes to obtain a curable composition. The detailed amount of each component added (the content) is as shown in Table 1, and the unit for the numerical values in Table 1 is "parts by mass" unless otherwise specified. The item "component (A) + component (B))/component (C)" indicates the total amount of the component (A) and the component (B) (unit: parts by mass) relative to 1 part by mass of the component (C). Note that blank columns and "0" in Table 1 indicate that the relevant component is not contained.

### <Component (A) and comparative component>

a1: An isoparaffinic solvent containing isononane with an initial boiling point of 131°C (KYOWASOL (registered trademark) C-900 manufactured by KH Neochem Co., Ltd.)

a'1: An isoparaffinic solvent containing isohexane with an initial boiling point of 61°C (isohexane manufactured by Maruzen Petrochemical Co., Ltd.)

### <Component (B)>

b1: An isoparaffinic solvent containing isododecane (2,2,4,6,6-pentamethylheptane) with an initial boiling point of 178°C (Marcasol R manufactured by Maruzen Petrochemical Co., Ltd.)

### <Component (C) and comparative component>

c1: An isoparaffinic solvent containing isohexadecane with an initial boiling point of 213°C (IP solvent 2028 manufactured by Idemitsu Kosan Co., Ltd.)

c'1: An isoparaffinic solvent with an initial boiling point of 185°C (ISOPAR (registered trademark) L manufactured by Standard Sekiyu Osaka Hatsubaisho Co., Ltd.)

c'2: An isoparaffinic solvent with an initial boiling point of 270°C (ISOPAR (registered trademark) V manufactured by Standard Sekiyu Osaka Hatsubaisho Co., Ltd.)

### <Component (D)>

d1: An organic polysilazane compound having a 100% active ingredient (KiON HTA1500 rapid cure, manufactured by AZ Electronic Materials SA)

d2: An organic polysilazane compound having a 100% active ingredient (KiON HTA1500 slow cure, manufactured by AZ Electronic Materials SA)

### <Component (E)>

e1: An organotitanium-based compound (titanium alkoxide compound; D-25 manufactured by Shin-Etsu Chemical Co., Ltd.)

### [Evaluation]

Tests were conducted under the following conditions and evaluations were performed.

### <(1) Drying properties>

Approximately 2 mL of each curable composition was soaked into a nonwoven cloth. A test piece was prepared by applying a thin coat of the curable composition by hand onto an entire black painted surface of a black painted plate (material: SPCC-SD, dimensions: 0.8 mm × 70 mm × 150 mm, manufactured by Asahi-Betechno Co., Ltd.) using the above nonwoven cloth. A drying time at any portion on the applied surface of the test piece was measured by a method in accordance with JIS K 5600-3-3: 1999 finger touch drying test. After application of the curable composition, the test piece was measured every 15 seconds until 5 minutes had elapsed in an airless condition at 25°C, and thereafter measured every 5 minutes until 90 minutes had elapsed. The drying properties were evaluated based on the following criteria. Drying was confirmed by touch with the fingers to see if there was any tack. The results are shown in Table 1. In the present invention, × (cross mark) is unfavorable because the drying time is too long or too short, and installability (workability) is poor, while o(circle) is preferable from the viewpoint of a balance between pot life and drying properties during construction.

### <<Evaluation criteria>>

o (circle): Finger touch drying time was 5 minutes or longer and 60 minutes or shorter.

× (cross mark): Finger touch drying time was shorter than 5 minutes or longer than 60 minutes.

### <(2) Recovery workability after an elapse of a certain period of time>

Each curable composition was fully soaked into a nonwoven cloth, and was applied thinly by hand onto a surface of a black painted plate (material: SPCC-SD, dimensions: 0.8 mm × 70 mm × 150 mm, manufactured by Asahi-Betechno Co., Ltd.). Next, after having elapsed 30 minutes in an airless condition at 25°C, the curable composition was wiped up with a dry microfiber cloth, and the recovery workability after 30 minutes elapsed was evaluated based on the following criteria. The results are shown in Table 1. It is to be noted that the unevenness was visually confirmed. In the present invention, construction recovery workability after an elapse of a certain period of time is preferably evaluated as o (circle) or ⊙ (double circle).

### <<Evaluation criteria>>

⊙ (double circle): It was possible to wipe evenly, and it was slippery and had good workability when wiping up.

∘ (circle): It was possible to wipe evenly, but was hard to be slippery and was stuck in upon the wiping up, resulting in slightly poor workability.

× (cross mark): Unevenness remained. Alternatively, it was hard to be slippery upon the wiping up, resulting in extremely poor workability.

### <(3) Water repellency>

Each curable composition was fully soaked into a nonwoven cloth, and was applied thinly by hand onto a surface of a black painted plate (material: SPCC-SD, dimensions: 0.8 mm × 70 mm × 150 mm, manufactured by Asahi-Betechno Co., Ltd.). After 10 minutes, the excess was wiped off with a dry microfiber cloth, and a test piece was fabricated by allowing the resulting test piece to stand and curing it under an environment of 25°C and 55% RH for 168 hours. Then, one drop (0.005 ml) of ion-exchanged water was dropped onto the surface of each of the test pieces with a syringe, and a contact angle of water to a substrate surface at this time was measured using a contact angle meter (DM-500, manufactured by Kyowa Interface Science Co., Ltd.) then to evaluate the water contact angle. The results are shown in Table 1. In the present invention, the water repellency is preferably evaluated as o (circle).

### <<Evaluation criteria>>

o (circle): Water contact angle is 100 degrees or larger.

× (cross mark): Water contact angle is smaller than 100 degrees.

**[Table 1]**

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|---|
| a1 | 200 | 200 | 140 | 140 | 200 | 150 | 150 | 150 | 300 | 200 | 280 | 0 | 140 | 200 | 200 | |
| a'1 | | | | | | | | | | | | | | | | 200 |
| b1 | 120 | 120 | 280 | 280 | 80 | 145 | 140 | 130 | 0 | 100 | 0 | 280 | 80 | 80 | 80 | 120 |
| c1 | 20 | 20 | 20 | 20 | 20 | 5 | 15 | 20 | 0 | 0 | 20 | 20 | 80 | | | 20 |
| c'1 | | | | | | | | | | | | | | 20 | | |
| c'2 | | | | | | | | | | | | | | | 20 | |
| d1 | 10 | | 10 | | 10 | 10 | 10 | 10 | 10 | 10 | 10 | 10 | 10 | 10 | 10 | 10 |
| d2 | | 10 | | 10 | | | | | | | | | | | | |
| e1 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| component (A)/(component (A) + component (B) + component (C)) (% by mass) | 58.8 | 58.8 | 31.8 | 31.8 | 66.7 | 500 | 49.2 | 50.0 | 1000 | 66.7 | 93.3 | 0.0 | 46.7 | 66.7 | 71.4 | 0.0 |
| component (B)/(component (A) + component (B) + component (C)) (% by mass) | 35.3 | 35.3 | 63.6 | 63.6 | 26.7 | 48.3 | 45.9 | 43.3 | 0.0 | 33.3 | 0.0 | 93.3 | 26.7 | 28.6 | 28.6 | 85.7 |
| component (C)/(component (A) + component (B) + component (C)) (% by mass) | 5.9 | 5.9 | 4.5 | 4.5 | 6.7 | 1.7 | 4.9 | 6.7 | 0.0 | 0.0 | 6.7 | 6.7 | 26.7 | 0.0 | 0.0 | 14.3 |
| (component (A) + component (B))/component (C) | 16 | 16 | 21 | 21 | 14 | 59 | 19 | 14 | 0 | 0 | 14 | 14 | 3 | 0 | 0 | 16 |
| (1) Drying properties | ○ | ○ | ○ | ○ | ○ | ○ | ○ | ○ | × | ○ | ○ | ○ | × | ○ | × | ○ |
| (2) Recovery workability after an elapse of a certain period of time | ⊙ | ⊙ | ⊙ | ⊙ | ⊙ | ○ | ⊙ | ⊙ | × | × | × | ○ | ○ | × | ○ | × |
| (3) Water repellency | ○ | ○ | ○ | ○ | ○ | ○ | ○ | ○ | ○ | ○ | ○ | × | × | ○ | × | ○ |

From Examples 1 to 8 in Table 1, the curable compositions are found to have excellent drying properties, recovery workability after an elapse of a certain period of time, and water repellency of the coating film.

Comparative Example 1 in Table 1 in which the curable composition did not contain the component (B) and component (C), resulted in being poor in the drying properties and recovery workability after an elapse of a certain period of time. Comparative Example 2 in which the curable composition did not contain the component (C), resulted in being poor in the recovery workability after an elapse of a certain period of time. Comparative Example 3 in which the curable composition did not contain the component (B), resulted in being poor in the recovery workability after an elapse of a certain period of time. Comparative Example 4 in which the curable composition did not contain the component (A), resulted in being poor in the water repellency. Comparative Example 5 in which the curable composition contains the component (C) in an excess amount (26.7% by mass in (the component (A) + the component (B) + the component (C)) over the range of the present invention, resulted in being poor in the drying properties and the water repellency. Comparative Example 6 in which the curable composition contains the component c'1 (organic solvent having a lower initial boiling point than the component (C)) instead of the component (C), resulted in poor recovery workability after an elapse of a certain period of time. Comparative Example 7 in which the curable composition contains the component c'2 (organic solvent having a higher initial boiling point than the component (C)) instead of the component (C), resulted in poor drying properties and water repellency. Comparative Example 8 in which the curable composition contains the component a'1 (organic solvent having a lower initial boiling point than the component (A)) instead of the component (A), resulted in poor recovery workability after an elapse of a certain period of time.

### Industrial Applicability

According to the present invention, there is provided a curable composition excellent in drying properties, recovery workability after an elapse of a certain period of time, and water repellency of the coating film. The curable composition is industrially useful because it can be used as a coating agent for automobiles and the like.

The present application is based on Japanese Patent Application No. 2021-113997 filed on July 9, 2021, the disclosed contents of which are incorporated by reference in their entirety.

## Claims

1. A curable composition comprising components (A) to (E) as follows, and containing 12 to 85% by mass of the component (A), 12 to 85% by mass of the component (B), and 0.5 to 20% by mass of the component (C), relative to 100% by mass in total of the component (A), the component (B) and the component (C):
(A) an organic solvent having an initial boiling point of 85°C or higher and lower than 145°C;
(B) an organic solvent having an initial boiling point of 145°C or higher and lower than 190°C;
(C) an organic solvent having an initial boiling point of 190°C or higher and lower than 250°C;
(D) a polysilazane compound; and
(E) a catalyst.

2. The curable composition according to claim 1, wherein the component (D) is an organic polysilazane compound or a polysiloxazane compound.

3. The curable composition according to claim 1, wherein the component (E) comprises at least one selected from the group consisting of an organotitanium compound, an organoaluminum compound, an inorganic acid compound, and an organic base compound.

4. The curable composition according to claim 1, wherein a total amount of the components (A) to (C) is 10 to 800 parts by mass relative to 10 parts by mass of the component (D).

5. The curable composition according to claim 1, wherein the component (C) comprises at least one selected from the group consisting of isoparaffins having 14 to 18 carbon atoms and normal paraffins having 13 to 17 carbon atoms.

6. The curable composition according to claim 1, wherein the composition is used for forming a coating film on a surface of a substrate selected from the group consisting of metal, glass, ceramics, a plastic, a fiber, a steel plate, and an exterior steel plate.

7. The curable composition according to claim 1, being used as an antifouling coating agent.

8. A cured film obtained by curing the curable composition set forth in claim 1.

9. An article having the cured film set forth in claim 8 formed thereon, wherein the article is selected from the group consisting of automobiles, two-wheeled vehicles, bicycles, railroad vehicles, solar panels, vending machines, and buildings.
